# EUROPÄISCHE PATENTSCHRIFT

(11) **EP 1 353 198 B1**
(45) Veröffentlichungstag und Bekanntmachung des Hinweises auf die Patenterteilung: **03.08.2005**
(21) Anmeldenummer: 03005390.4
(22) Anmeldetag: 13.03.2003
(51) Int. Cl.: G02B 5/30, G02B 27/28, H04N 5/74

(54) **Anordnung zur Polarisation von Licht**
Arrangement for the polarisation of light
Ensemble pour la polarisation de la lumière

(30) Priorität: 12.04.2002 DE 10216169
(43) Veröffentlichungstag der Anmeldung: 15.10.2003
(73) Patentinhaber: CARL ZEISS JENA GmbH, 07745 Jena (DE)
(72) Erfinder: Schmidt, Dietrich, 07747 Jena (DE); Symanowski, Christfried, 07745 Jena (DE)

(56) Entgegenhaltungen:
- EP-A- 1 098 536
- EP-A- 1 274 256
- DUELLI, M., MCGETTIGAN, T., PENTICO, C.: "Polarization Recovery based on Light Pipes" PROC. OF SPIE, PROJECTION DISPLAYS VIII, Bd. 4657, Januar 2002 (2002-01), Seiten 9-16, XP009009490

## Beschreibung

Die Erfindung betrifft eine Anordnung zur Polarisation von Licht, bevorzugt zur Verwendung in Projektoren, mit mindestens einer Beleuchtungsquelle, einem zum Zwecke der Homogenisierung des von der und/oder den Beleuchtungsquellen ausgehenden unpolarisierten Lichtbündels dienenden Integrator mit einer Lichteintritts- und einer Lichtaustrittsebene, einem die Eintrittsöffnung aufweisenden Bauteil, das in Richtung des Innenraumes des Integrators reflektierend ausgebildet ist, wobei das Intensitätsmaximum des Lichtbündels sich entlang einer zwischen der Lichteintrittsebene und der Lichtaustrittsebene erstreckenden Achse ausbreitet, den für die Führung des Lichtbündels reflektierend ausgebildeten Flächen und Mitteln zur Polarisation und Reflexion von Teilstrahlen des Lichtbündels.

Bekannte Anordnungen zur Polarisation von Licht, sogenannte Polarisations-Recovery-Systeme, befinden sich im Beleuchtungsstrahlengang unpolarisierter Lichtquellen und finden vorwiegend dort Anwendung, wo hohe Beleuchtungsstärken polarisierten Lichtes verlangt werden oder eine besonders effektive Ausnutzung des von der Lichtquelle ausgehenden Lichtes für den gesamten Polarisationszustand erforderlich ist. Dabei soll der polarisiert nutzbare Anteil einer Lampenlichtleistung auf über 50 % der gesamten unpolarisierten Lichtleistung erhöht werden.

Da sich unter Verwendung klassischer Polarisatoren, wie beispielsweise doppelbrechende Kristalle oder Polarisationsfolien, dies nicht realisieren lässt, werden im zunehmenden Maße Prismenanordnungen verwendet, mit denen das unpolarisierte Licht in zwei senkrecht zueinander polarisierte Anteile zerlegt wird. Anschließend wird der nichtpolarisierte Lichtanteil mit Hilfe mindestens einer Phasenplatte in die erforderliche Richtung gedreht und den bereits in die gewünschte Richtung polarisierten Anteil beigefügt.
In Abhängigkeit von der Ausführungsform verdoppelt sich dabei die Kondensorkonstante der Beleuchtung.

Polarisations-Recovery-Systeme werden häufig in Projektoren auf der Basis transmissiver LCD's eingesetzt. Sie haben überwiegend einen Wabenkondensoren ähnlichen Aufbau, wobei die zweite Wabenplatte nahe der ersten liegt und an Stelle von Elementlinsen ein Raster aus vielen Prismenanordnungen vorgesehen ist. Damit wird die Funktion des Polarisations-Recovery mit der Verbesserung der Gleichäßigkeit des Lichtes verbunden. Sie bewirken zwar darüberhinaus eine effektive Nutzung großer Lichtquellen mit besonders hoher Lichtleistung, wobei die Vergrößerung der Kondensorkostanten sekundär ist, haben aber den Nachteil, dass ihr Aufbau sehr kompliziert und somit das gesamte System kostenintensiv ist.

Neuartige reflektive LCD's (LCOS) benötigen für ihre Funktion ebenfalls linear polarisiertes Licht. Da sie erheblich kleiner sind, als die transmissiven LCD's, benötigen sie auch eine zum Teil niedrigere Kondensorkonstante. Darüberhinaus sind bei derartigen LCOS, beispielsweise in 3-Chip-Anordnungen, spezielle Farbmanagementsysteme erforderlich, die durch ihre Eigenschaften die Kondensorkonstante zusätzlich begrenzen.

Unter diesen Umständen sind Polarisations-Recovery-Systeme der beschriebenen bekannten Art nur zum Teil einsetzbar, da entweder die Lichtausbeute erheblich niedriger als bei transmissiven LCD-Sytemen ist oder nur spezielle Lichtquellen verwendbar sind, die selbst schon eine geringe Lichtleistung liefern.

M.Duelli, T.Mc Gettigan (OCLI-A JDS Uniphase Corporation) und C. Pentico (Advanced Digital Optics) stellen auf der Electronic Imaging 01/2002 in San Jose, California, USA ein Polarisations-Recovery-System vor, bei welchem ein Vollintegrator (Lichtmischstab) verwendet wird, dessen Lichteintrittselement eine in Richtung des Innenraumes des Integrators aufweisende reflektierende Fläche aufweist und bei dem in der Austrittsebene ein reflektiver Polarisator angeordnet ist.

Das über die Lichteintrittsöffnung in den Integrator einfallende Licht wird durch Totalreflexion im Integrator gemischt und gelangt auf den reflektierenden Polarisator. Während der transmissionspolarisierte Teil des Lichtes durch den Polarisator hindurch aus dem Integrator austritt, gelangt der nichttransmissionspolarisierte Lichtanteil zurück an die Innenfläche des Lichteintrittselementes, wird dort reflektiert und beim erneuten Durchgang durch den Integrator nochmals homogenisiert. Zur Drehung der Polarisationsrichtung der Lichtstrahlen werden zusätzlich λ/4- Platten im Integrator angeordnet. Wiederum gelangt der transmissionspolarisierte Anteil durch den Polarisator und wird dem bereits transmissionspolarisierten Licht beigefügt. Dieser Prozess erfolgt solange, bis der gesamte Lichtanteil, abgesehen von den absorbierten Teilstrahlen sowie Reflexionsverlusten, in die gewünschte Richtung polarisiert wurde und aus dem Integrator austritt. Zur Drehung der Polarisationsrichtung der Lichtstrahlen werden zusätzlich λ/4- Platten im Integrator angeordnet.

Derartige Anordnungen haben den Vorteil, dass die Kondensorkonstante nur im Verhältnis von Austritts- zu Eintrittsfläche des Integrators vergrößert wird.

Nachteilig hingegen ist, dass eine λ/4- Platte zur Drehung der Polarisationsrichtung im Inneren des Lichtmischstabes (Vollintegrator) anzuordnen ist, die mehrfach durchlaufen werden muß.

Ausgehend von den beschriebenen Nachteilen liegt der Erfindung die Aufgabe zugrunde, eine Anordnung zur Polarisation von Licht unter Verwendung eines Integrators, bevorzugt für den Einsatz in Projektoren, dahingehend weiterzuentwickeln, dass der Justageaufwand der polarisationsoptischen Mittel reduziert wird und die Verwendung sowohl eines Hohlintegrators, als auch eines Vollintegrators ermöglicht.

Diese Aufgabe wird durch eine Anordnung zur Polarisation von Licht der eingangs beschriebenen Art, erfindungsgemäß dadurch gelöst, dass in der Lichtaustrittsebene des Integrators mindestens zwei Polarisatoren mit gleicher Winkellage zur Achse des Integrators angeordnet sind, die Polarisatoren zueinander gedrehte Polarisationsrichtungen aufweisen und außerhalb des Integrators Phasenplatten, die die Polarisatoren mit nicht transmittierten Polarisationsrichtungen an die Polarisatoren mit transmittierten Polarisationsrichtungen anpassen, vorgesehen sind.

Prinzipiell können in der Lichtaustrittsebene beliebig viele Polarisatoren unterschiedlicher Form und Größe angeordnet sein. Entscheidend ist, dass die Phasenplatten je nach Anwendungsfall nur eine geeignete Drehung der Lichtstrahlen in die gewünschte Polarisationsrichtung herbeiführen oder Zonen, gegebenenfalls elliptischer Polarisation, erzeugen.

Bevorzugterweise sind in der Lichtaustrittsebene des Integrators zwei horizontal und/oder vertikal geteilte gleichgroße Polarisatoren mit um 90 Grad zueinander verdrehten Polarisationsrichtungen angeordnet, wobei die transmittierte Polarisationsrichtung des ersten Polarisators parallel zur reflektierenden Polarisationsrichtung des zweiten Polarisators liegt und außerhalb des Integrators der zweite Polarisator vollständig von einer Phasenplatte bedeckt ist, die die Polarisationsrichtung dieses Polarisators in die Polarisationsrichtung des ersten Polarisators dreht.

Das unpolarisierte Licht tritt durch die Eintrittsöffnung in den Integrator ein und wird beim Durchgang bis hin zu den in der Lichtaustrittsebene angeordneten Polarisatoren gemischt (homogenisiert), so dass in dieser Ebene eine nahezu gleichmäßige Verteilung vorliegt. Der auf den ersten Polarisator auftreffende Anteil des Lichtes mit an die Konfiguration dieses Polarisators definierter Richtung verläßt den Integrator mit entsprechender Polarisationsrichtung. Dieser Anteil beträgt idealerweise 25 % des gesamten Lichtstromes. In Analogie dazu verläßt der auf den zweiten Polarisator auftreffende sowie entsprechend gerichtete Anteil des homogenisierten Lichtes den Integrator.

Durch die Anordnung der Phasenplatte hinter dem zweiten Polarisator wird das Licht um 90 Grad gedreht, das heisst in die Richtung der aus dem ersten Polarisator austretenden Teillichtstrahlen. Damit sind ca. 50 % des Lichtstromes in gleicher Richtung polarisiert aus dem Integrator ausgetreten. Die auf die beiden Polarisatoren auftreffenden Teillichtstrahlen, die den Integrator nicht verlassen, werden reflektiert und durchlaufen den Integrator erneut bis zur Lichteintrittsebene, wobei beide Anteile senkrecht zueinander polarisiert sind und wieder durchmischt werden.

Infolgedessen, dass die Lichteintrittsebene, ausgenommen der Eintrittsöffnung, in den Innenraum des Integrators wirkend, reflektierend ausgebildet ist, werden die Teilstrahlen wiederum in die Lichtaustrittsebene zurück reflektiert. In der Lichtaustrittsebene erfolgt dann in Analogie zum ersten Durchgang der Lichtstrahlen durch den Integrator die Polarisationsaufspaltung. Dieser Vorgang wiederholt sich unendlich mal, so dass idealerweise nahezu 100 % polarisiertes Licht mit gleicher Polarisationsrichtung aus dem Integrator austritt.

Bedingt durch die Öffnung in der Lichteintrittsebene geht allerdings ein Teil des Lichtes verloren. Um die Effektivität der Anordnung weiter zu erhöhen, müsste dieser Anteil mit an sich bekannten optischen Mitteln wieder in den Integrator eingekoppelt werden.

Zweckmäßigerweise sollten die Polarisatoren und/oder die Phasenplatten als Folien ausgebildet und reflektierend sein. Anderenfalls müssten sie an den Seitenflächen die Eigenschaften eines Lichtintegrators nachbilden können.

Polarisatoren aus doppelbrechenden Kristallen bekannter Bauweise erfüllen die Anforderungen hingegen nicht.

Als vorteilhaft erweisen sich Drahtgitterpolarisatoren.

Die Öffnung zum Eintritt in den Integrator kann beliebig gestaltet sein. Günstig ist jedoch eine kreisförmige Öffnung, da diese, insbesondere bei Verwendung von Hohlintegratoren, fertigungstechnisch relativ einfach herstellbar ist.

Eine weitere vorteilhafte Ausgestaltungsvariante der erfindungsgemäßen Anordnung besteht darin, dass an der in den Innenraum des Integrators orientierten Seite des die Lichteintrittsöffnung aufweisenden Bauteiles eine Phasenplatte angeordnet ist, die die Eigenschaft besitzt, die Polarisationsebene des von den in der Lichtaustrittsebene befestigten Polarisatoren reflektierten Lichtanteiles beim zweimaligen Durchgang durch den Integrator um 90 Grad zu drehen. Mit dieser Variante lässt sich der transmissive Anteil des Lichtes durch den Flächenanteil in der Lichtaustrittsebene, der diesen Lichtanteil reflektiert hat, beim mehrmaligen Durchlauf durch den Integrator erhöhen. Das Polarisations-Recovery wäre dann auch mit nur einem Polarisator in der Lichtaustrittsebene möglich. Als nachteilig erweist sich jedoch, dass relativ große Polarisatoren, beziehungsweise Phasenplatten zum Einsatz kommen müssten, die sehr kostenintensiv sind. Darüberhinaus ist zum Zwecke der Erzielung einer hohen Effektivität eine Aussparung in der Phasenplatte erforderlich, die wiederum sehr aufwendig in der Herstellung und Justierung ist.

Abgesehen von den Nachteilen der verschiedenen Varianten ist die erfindungsgemäße Anordnung zu den Lösungen des Standes der Technik einfacher in ihrem Aufbau und somit kostengünstiger herzustellen. Die Homogenisierung und Polarisation des Lichtes kann sowohl unter Verwendung von Hohl- als auch von Vollintegratoren erfolgen, da die zum Polarisations-Recovery notwendigen Elemente vorwiegend in der Lichteintritts-, beziehungsweise in der Lichtaustrittsebene und nicht im Innenraum des Integrators angeordnet sind.

Im folgenden wird die Erfindung, anhand von Ausführungsbeispielen näher erläutert, die in den Figuren schematisch dargestellt sind. Gleiche Bezugszeichen in den einzelnen Figuren bezeichnen dabei gleiche Elemente. Im einzelnen zeigen:
- Fig.1:: die schematische Darstellung des Integrators mit geteilter Austrittsfläche
- Fig.2:: die schematische Darstellung des Integrators mit einer Phasenplatte in der Lichteintrittsebebe

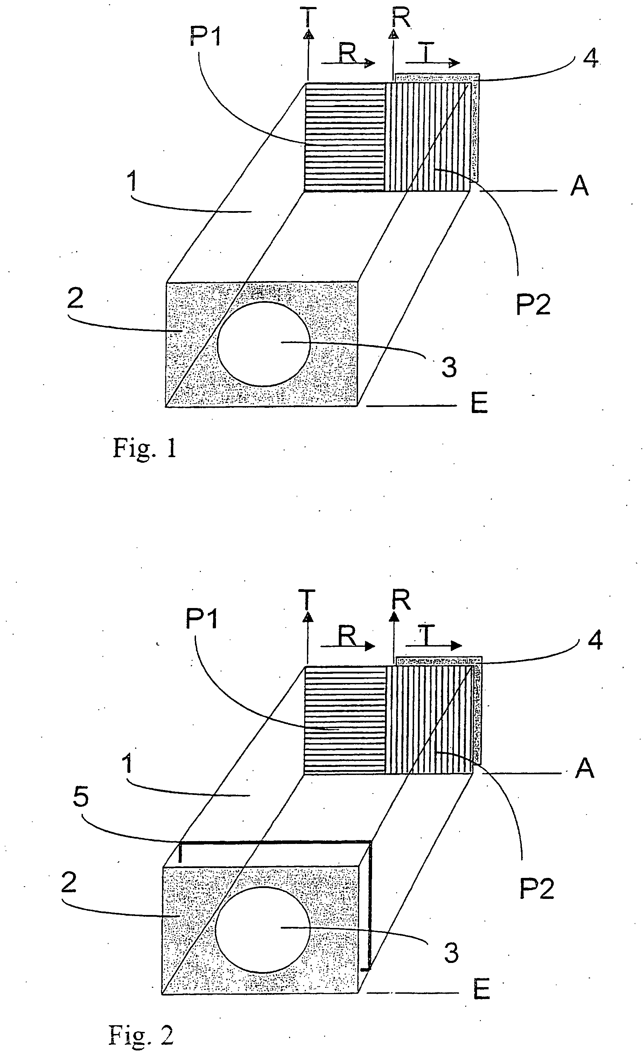

Fig.1 zeigt einen Integrator 1, der als quaderförmiger Hohlintegrator ausgebildet ist. In der Lichteintrittsebene E befindet sich ein plattenförmiges Bauteil 2, welches eine kreisförmige Eintrittsöffnung 3 aufweist und in Richtung des Innenraumes des Integrators 1 mit einer nicht mit dargestellten reflektierenden Fläche versehen ist. In der parallel zur Lichteintrittsebene E liegenden Lichtäustrittsebene A des Integrators 1 befinden sich zwei gleichgroße, um 90 Grad zueinander verdrehte Polarisatoren P1 und P2, die die Austrittsfläche vollständig abdecken, wobei die transmittierte Polarisationsrichtung T des ersten Polarisators P1 parallel zur reflektierenden Polarisationsrichtung R des zweiten Polarisators P2 liegt. Außerhalb des Integrators 1 wird der Polarisator P2 vollständig von einer Phasenplatte 4 bedeckt. Die Phasenplatte 4 ist so konfiguriert, dass die Polarisationsrichtung um 90 Grad gedreht wird, so dass sie der austretenden Polarisationsrichtung, das heisst der Richtung T des Polarisators P1, entspricht.

In Fig.1 nicht dargestellt, gelangt das von einer Beleuchtunsquelle ausgehende nichtpolarisierte Licht durch die Eintrittsöffnung 3 in den Integrator 1 und wird beim Durchgang bis hin zur den Polarisatoren P1 und P2 gemischt (homogenisiert), so dass in der Lichtaustrittsebene A eine nahezu gleichmäßige Verteilung des Lichtstromes vorliegt. Der auf den ersten Polarisator P1 auftreffende Anteil des Lichtes mit an seine Konfiguration definierter Richtung T tritt aus dem Integrator 1 P1-T-polarisiert aus. Idealerweise beträgt dieser Anteil 25 % des gesamten Lichtstromes.

Der auf den zweiten Polarisator P2 auftreffende und durch ihn hindurchtretende Lichtanteil wird durch die Anordnung der Phasenplatte 4 hinter dem Polarisator P2 um 90 Grad in die Richtung des aus dem ersten Polarisator P1 austretenden Lichtes gedreht und ist somit ebenfalls P1-T-polarisiert. Damit sind ca. 50 % des Lichtstromes in gleicher Richtung polarisiert aus dem Integrator 1 ausgetreten.

Die auf die beiden Polarisatoren P1 und P2 auftreffenden Teillichtstrahlen P1-R und P2-R, die den Integrator 1 nicht verlassen, werden reflektiert und durchlaufen den Integrator 1 erneut bis zur Lichteintrittsebene E, wobei beide Anteile P1-R und P2-R senkrecht zueinander polarisiert sind und wieder durchmischt werden.
In der Lichteintrittsebene E tritt der auf die Eintrittsöffnung 3 fallende Anteil des Lichtes aus dem Integrator 1 aus und ist, sofern er nicht mit an sich bekannten optischen Mitteln wieder eingekoppelt wird, verloren. Durch die in den Innenraum des Integrators 1 orientierte reflektierende Schicht auf dem Bauteil 2 werden die Teillichtstrahlen P1-R und P2-R wieder insgesamt auf die Polarisatoren P1 und P2 reflektiert, in Analogie zum ersten Durchgang durch den Integrator 1 entsprechend P1-T-polarisiert und dem bereits ausgetretenen Licht beigefügt. Im Idealfall wird nach unendlich vielen Reflexionen und der Rückkopplung des durch die Eintrittsöffnung 3 entweichenden Lichtes nahezu 100 % P1-T-polarisiertes Licht erzeugt.

Fig.2 zeigt in einem zweiten Ausführungsbeispiel die schematische Darstellung des Integrators 1 mit einer Phasenplatte 5 in der Lichteintrittsebene E. Die Phasenplatte 5 besitzt die Eigenschaft, die Polarisationsebenen des von den Polarisatoren P1 und P2 reflektierten Lichtanteiles P1-R und P2-R beim zweimaligen Durchgang durch den Integrator 1 nochmals um 90 Grad zu drehen, so dass beim erneuten Auftreffen der reflektierten Teillichtstrahlen P1-R und P2-R auf die Polarisatoren P1 und P2 der P1-T-polarisierte Lichtanteil erhöht wird. Die Phasenplatte 5 kann an der Stelle der Eintrittsöffnung 3 aus thermischen Gründen durchbrochen sein. Dies ist aber für ihre eigentliche Funktion unerheblich.

Diese Variante ist im Vergleich zum ersten Ausführungsbeispiel zwar effektiver, als nachteilig erweist sich aber die relativ große und daher kostenintensive Phasenplatte 5. Ferner ist insbesondere dann, wenn die Phasenplatte 5 mit einer Aussparung zum Zweckes des Lichteintritts versehen wird, der Justieraufwand sehr hoch.

### Bezugszeichenliste

- 1: Integrator
- 2: Bauteil
- 3: Eintrittsöffnung
- 4,5: Phasenplatte
- E: Lichteintrittsebene
- A: Lichtaustrittsebene
- P1,P2: Polarisator
- T,R: Polarisationsrichtung

## Patentansprüche

1. Integrator zur Homogenisierung eines unpolarisierten Lichtbündels, bevorzugt zur Verwendung in Projektoren, mit einer Lichteintritts- (E) und einer Lichtaustrittsebene (A), einem die Eintrittsöffnung (3) aufweisenden Bauteil (2), das in Richtung des Innenraumes des Integrators (1) reflektierend ausgebildet ist, den für die Führung des Lichtbündels reflektierend ausgebildeten Seitenflächen sowie Mitteln zur Polarisation und Reflexion von Teilstrahlen des in den Integrator (1) eintretenden Lichtbündels, **dadurch gekennzeichnet, dass** in der Lichtaustrittsebene (A) des Integrators (1) mindestens zwei Polarisatoren (P1,P2) komplanar nebeneinander angeordnet sind, die Polarisatoren (P1,P2) zueinander gedrehte Polarisationsrichtungen (T,R) aufweisen, wobei jeder Polarisator (P1,P2) so ausgebildet ist, dass eine Polarisationskomponente des eintretenden Lichtes reflektiert, während die dazu orthogonale Polarisationskomponente transmittiert wird und auf der der Lichteintrittsebene (E) abgewandten Seite, im Bereich des Lichtaustritts aus den Polarisatoren (P1, P2) hinter einem Polarisator (P2) zum Zwecke der Anpassung der Polarisationsebene an die Polarisationsebene der vom anderen Polarisator (P1) transmittierten Lichtstrahlen eine, die Fläche des Polarisators (P2) vollständig bedeckende Phasenplatte (4), parallel zur Lichtaustrittsebene (A) angeordnet ist.

2. Integrator zur Homogenisierung eines unpolarisierten Lichtbündels, nach Anspruch 1, **dadurch gekennzeichnet, dass** in der Lichtaustrittsebene (A) des Integrators (1) zwei gleichgroße, die Lichtaustrittsfläche vollständig bedeckende, Polarisatoren (P1,P2) mit um 90 Grad zueinander verdrehten Polarisationsrichtungen (T,R) angeordnet sind, wobei die transmittierende Polarisationsrichtung (T) des ersten Polarisators (P1) parallel zur reflektierenden Polarisationsrichtung (R) des zweiten Polarisators (P2) liegt.

3. Integrator zur Homogenisierung eines unpolarisierten Lichtbündels, nach den Ansprüchen 1 und 2, **dadurch gekennzeichnet, dass** die Polarisatoren (P1,P2) und/oder die Phasenplatte (4) als reflektierende Folien ausgebildet sind.

4. Integrator zur Homogenisierung eines unpolarisierten Lichtbündels, nach den Ansprüchen 1 und 2, **dadurch gekennzeichnet, dass** die Polarisatoren (P1,P2) Drahtgitterpolarisatoren sind.

5. Integrator zur Homogenisierung eines unpolarisierten Lichtbündels, nach Anspruch 1, **dadurch gekennzeichnet, dass** die Lichteintrittsöffnung (3) kreisförmig ausgebildet ist.

6. Integrator zur Homogenisierung eines unpolarisierten Lichtbündels, nach Anspruch 1, **dadurch gekennzeichnet, dass** an der in den Innenraum des Integrators (1) orientierten Seite des die Lichteintrittsöffnung (3) aufweisenden Bauteiles (2) eine zweite Phasenplatte (5) angeordnet ist, die die Eigenschaft besitzt, die Polarisationsrichtung des von den in der Lichtaustrittsebene (A) befestigten Polarisatoren (P1,P2) reflektierten Lichtanteiles (P1-R; P2-R) beim zweimaligen Durchgang durch den Integrator (1) um 90 Grad zu drehen.

7. Integrator zur Homogenisierung eines unpolarisierten Lichtbündels, nach Anspruch 6, **dadurch gekennzeichnet, dass** die zweite Phasenplatte (5) in Analogie zur Ausbildung der Eintrittsöffnung (3) einen Durchbruch aufweist.

## Claims

1. Integrator for homogenising an unpolarised light bundle, preferably for use in projectors, having a light entry plane (E) and a light exit plane (A), a component (2) which comprises the entry orifice (3) and which is formed so as to reflect in the direction of the inner chamber of the integrator (1), the side surfaces formed in a reflective manner to guide the light bundle, and means for polarisation and reflection of partial beams of the light bundle entering the integrator (1), **characterised in that** in the light exit plane (A) of the integrator (1) at least two polarisers (P1, P2) are disposed next to each other in a coplanar manner, the polarisers (P1, P2) have polarisation directions (T, R) which are rotated towards each other, wherein each polariser (P1, P2) is formed in such a manner that a polarisation component of the incoming light is reflected while the polarisation component orthogonal thereto is transmitted and in the region of the light exit from the polarisers (P1, P2) a phase plate (4) is disposed in parallel with the light exit plane (A) for the purpose of adapting the polarisation planes of the transmitted light beams.

2. Integrator for homogenising an unpolarised light bundle as claimed in claim 1, **characterised in that** in the light exit plane (A) of the integrator (1) two equal-sized polarisers (P1, P2) which completely cover the light exit surface are disposed having polarisation directions (T, R) rotated by 90° with respect to each other, wherein the transmitting polarisation direction (T) of the first polariser (P1) lies in parallel with the reflective polarisation direction (R) of the second polariser (P2), and in the region of the light exit from the polarisers (P1, P2) behind a polariser (P2) a phase plate (4) is disposed in parallel with the light exit plane (A) for the purpose of adapting the polarisation plane of the light beams transmitted from the other polariser (P1), wherein the surface of the polariser (P2) is completely covered by the phase plate (4).

3. Integrator for homogenising an unpolarised light bundle as claimed in claims 1 and 2, **characterised in that** the polarisers (P1, P2) and/or the phase plates (4, 5) are formed as reflective films.

4. Integrator for homogenising an unpolarised light bundle as claimed in claims 1 and 2, **characterised in that** the polarisers (P1, P2) are wire grid polarisers.

5. Integrator for homogenising an unpolarised light bundle as claimed in claim 1, **characterised in that** the light entry orifice (3) is circular.

6. Integrator for homogenising an unpolarised light bundle as claimed in claim 1, **characterised in that** on the side of the component (2), which comprises the light entry orifice (3), orientated into the inner chamber of the integrator (1) a phase plate (5) is disposed which has the property of rotating through 90° the polarisation direction of the portion of light (P1-R; P2-R) reflected from the polarisers (P1, P2), which are fixed in the light exit plane (A), upon double passage through the integrator (1).

7. Integrator for homogenising an unpolarised light bundle as claimed in claim 6, **characterised in that** the phase plate (5) has an aperture formed similarly to the formation of the entry orifice (3).

## Revendications

1. Intégrateur pour l'homogénéisation d'un faisceau de lumière non polarisé, de préférence pour utilisation dans des projecteurs, avec un plan d'entrée de lumière (E) et un plan de sortie de lumière (A), un composant (2) présentant l'ouverture d'entrée (3), qui est réalisé d'une manière réfléchissante en direction de l'espace intérieur de l'intégrateur (1), les faces latérales réalisées d'une manière réfléchissante pour le guidage du faisceau de lumière et avec des moyens pour la polarisation et la réflexion de rayons partiels du faisceau de lumière entrant dans l'intégrateur (1), **caractérisé en ce que** dans la plan de sortie de lumière (A) de l'intégrateur (1), au moins deux polariseurs (P1, P2) sont disposés de manière coplanaire l'un à côté de l'autre, que les polariseurs (P1, P2) présentent des directions de polarisation (T, R) tournées l'une relativement à l'autre, où chaque polariseur (P1, P2) est réalisé de façon qu'une composante de polarisation de la lumière entrante soit réfléchie pendant que la composante de polarisation orthogonale à celle-ci est transmise, et qu'une lame de phase (4) est disposée parallèlement au plan de sortie de lumière (A), dans la zone de la sortie de lumière des polariseurs (P1, P2) dans le but de l'adaptation des plans de polarisation des rayons de lumière de transmission.

2. Intégrateur pour l'homogénéisation d'un faisceau de lumière non polarisé selon la revendication 1, **caractérisé en ce que** sont disposés dans le plan de sortie de lumière (A) de l'intégrateur (1) deux polariseurs (P1, P2) de même grandeur, couvrant complètement la face de sortie de lumière, avec des directions de polarisation (T, R) tournées de 90 degrés l'une relativement à l'autre, où la direction de polarisation de transmission (T) du premier polariseur (P1) est parallèle à la direction de polarisation de réflexion (R) du deuxième polariseur (P2), et où est disposé dans la zone de la sortie de lumière des polariseurs (P1, P2) derrière un polariseur (P2), dans le but de l'adaptation du plan de polarisation des rayons de lumière transmis par l'autre polariseur (P1), une lame de phase (4) parallèlement au plan de sortie de lumière (A), où la face du polariseur (P2) est recouverte complètement par la lame de phase (4).

3. Intégrateur pour l'homogénéisation d'un faisceau de lumière non polarisé selon les revendications 1 et 2, **caractérisé en ce que** les polariseurs (P1, P2) et/ou les lames de phase (4, 5) sont réalisés comme feuilles réfléchissantes.

4. Intégrateur pour l'homogénéisation d'un faisceau de lumière non polarisé selon les revendications 1 et 2, **caractérisé en ce que** les polariseurs (P1, P2) sont des polariseurs en réseau à fil métallique.

5. Intégrateur pour l'homogénéisation d'un faisceau de lumière non polarisé selon la revendication 1, **caractérisé en ce que** l'ouverture d'entrée de lumière (3) est réalisée en une forme circulaire.

6. Intégrateur pour l'homogénéisation d'un faisceau de lumière non polarisé selon la revendication 1, **caractérisé en ce que**, au côté orienté vers l'espace intérieur de l'intégrateur (1) du composant (2) présentant l'ouverture d'entrée de lumière (3), une lame de phase (5) est disposée qui a la propriété de faire tourner la direction de polarisation de la part de lumière (P1-R ; P2-R) réfléchie par les polariseurs (P1, P2) fixés dans le plan de sortie de lumière (A) lors du passage à deux reprises à travers l'intégrateur (1) de 90 degrés.

7. Intégrateur pour l'homogénéisation d'un faisceau de lumière non polarisé selon la revendication 6, **caractérisé en ce que** la lame de phase (5), d'une manière analogue à la réalisation de l'ouverture d'entrée (3), présente un perçage.
